# EUROPÄISCHE PATENTSCHRIFT

(11) **EP 2 531 078 B1**
(45) Veröffentlichungstag und Bekanntmachung des Hinweises auf die Patenterteilung: **18.02.2015**
(21) Anmeldenummer: 10812846.3
(22) Anmeldetag: 22.12.2010
(51) Int. Cl.: A47J 31/36, A47J 31/42, A47J 31/44

(54) **ELEKTRISCHER KAFFEEVOLLAUTOMAT**
FULLY AUTOMATIC ELECTRIC COFFEE MAKER
MACHINE À CAFÉ ÉLECTRIQUE ENTIÈREMENT AUTOMATIQUE

(30) Priorität: 06.02.2010 DE 202010001953 U
(43) Veröffentlichungstag der Anmeldung: 12.12.2012
(73) Patentinhaber: Severin Elektrogeräte GmbH, 59846 Sundern (DE)
(72) Erfinder: KROESEN, Klaus, 46509 Xanten (DE); VOIGT, Christian, 46509 Xanten (DE)
(74) Vertreter: Köchling, Conrad-Joachim
(86) Internationale Anmeldenummer: PCT/DE2010/001516
(87) Internationale Veröffentlichungsnummer: WO 2011/095146

(56) Entgegenhaltungen:
- DE-A1- 4 103 820
- DE-U1- 20 300 850
- DE-U1-202010 001 953
- DE-U1-202010 010 770

## Beschreibung

Die Erfindung betrifft einen elektrischen Kaffeevollautomat, zumindest bestehend aus einem Gehäuse mit einem im Gehäuse integrierten Bohnentank, einem Mahlwerk, einer Brühgruppe, Bedienelementen und einer elektrischen Steuerung.

Derartige Kaffeevollautomaten sind im Stand der Technik vielfach bekannt.

Bei derartigen Kaffeevollautomaten ist insbesondere aus ästhetischen Gründen der Bohnentank innerhalb des Gehäuses des Kaffeevollautomaten integriert. Hierdurch lässt sich der Füllstand des Bohnentanks oft nur schwer erkennen. Das kann dazu führen, dass beim Bezug eines Getränkes keine ausreichende Menge an Bohnen mehr zur Verfügung steht. Das gewünschte Heißgetränk kann dann nicht zubereitet werden oder entspricht nicht der gewünschten Qualität, beispielsweise bezüglich der Kaffeestärke. Eine rechtzeitige Signalisierung, dass der Bohnenvorrat zur Neige geht, würde dies vermeiden.

Lediglich bei sehr teuren semiprofessionellen Kaffeevollautomaten sind aufwendige und damit hohe Kosten verursachende Detektorschaltungen integriert, die eine Signalisierung des Füllstandes des Bohnentanks ermöglichen. In Kaffeevollautomaten der günstigeren Preisklassen sind keinerlei Signalisierungen zur Bohnenvorratskontrolle gegeben.

Aus der DE 203 00 850 U1 ist ein Kaffeeautomat bekannt, auf dessen Gehäuse ein Kaffeebohnenbehälter aufgesetzt werden kann. Dieser Kaffeebohnenbehälter ist im Bereich seines einen Ausgabeschacht einschließenden Bodens lichtdurchlässig ausgebildet. Unterhalb dieses Bereiches des Bodens ist ein photoelektrisches Wandlerelement mit einer photosensitiven Oberfläche zur Unterseite des lichtdurchlässigen Bereiches des Bodens weisend angeordnet. Hierdurch wird erreicht, dass je nach Füllstand in dem Kaffeebohnenbehälter Umgebungslicht durch den Bestand an Kaffeebohnen auf die photosensitive Oberfläche fällt und damit über eine elektrische Steuerung ein Signal ausgegeben wird, das dem Benutzer mitteilt, dass der Füllstand an Kaffeebohnen nicht ausreichend ist.

In dieser Druckschrift ist auch angegeben, dass der Kaffeeautomat eine Infrarotlichtquelle umfasst, die zum Beleuchten des Inneren des Kaffeebohnenbehälters vorgesehen ist, wobei in diesem Fall die Photodiode zum Erfassen von Infrarotlicht ausgelegt ist. Hierbei wird mittels der Photodiode nicht Umgebungslicht als Füllstandssignal ausgewertet, sondern das von der Infrarotlichtquelle abgegebenen Licht innerhalb des Bohnentanks.

Aus der DE 41 03 820 A1 ist eine Kaffeemaschine bekannt, bei der Kaffeebohnenvorratsbehälter angeordnet sind, die einen transparenten Deckel aufweisen, so dass der Benutzer den Füllstand optisch wahrnehmen kann.

Aufgrund des eingangs genannten Standes der Technik liegt der vorliegenden Erfindung die Aufgabe zugrunde, einen Kaffeevollautomaten der eingangs genannten Art zu schaffen, bei dem auf kostengünstige und einfache Art und Weise signalisiert wird, dass der Bohnenvorrat zur Neige geht.

Zur Lösung dieser Aufgabe schlägt die Erfindung einen Anspruch 1 entsprechenden Kaffeevollautomaten vor.

Mittels einer entsprechend Anspruch 1 angeordneten Lichtquelle kann der Benutzer auf schnelle und einfache Art und Weise erkennen, ob der Bohnenvorrat innerhalb des Bohnentanks zur Neige geht. Der Benutzer muss hierzu lediglich in den Bohnentank hineinschauen. Wenn genügend Kaffeebohnen im Bohnentank bevorratet sind, sieht der Benutzer die Lichtquelle nicht. Sobald sich der Bohnentank genügend geleert hat, ist das Licht vom Benutzer durch den lichtdurchlässigen Deckel bzw. den lichtdurchlässigen Bereich des Gehäuses erkennbar. Nun ist der Benutzer darüber informiert, dass Bohnen in den Bohnentank nachgefüllt werden sollten.

Mittels einer derartigen Lichtquelle ist auf kostengünstige und einfache und dabei langlebige

Art und Weise eine Möglichkeit zur Überprüfung des Bohnenvorrates innerhalb des Bohnentanks gegeben. Des Weiteren ist eine derartige Lösung von jedem Benutzer auch ohne das Studieren einer Bedienungsanleitung erkennbar. Mittels der Erfindung ist eine frühzeitige Erkennung, dass Kaffeebohnen in den Bohnentank nachgefüllt werden sollten, und damit Vermeidung fehlerhafter Getränkezubereitung ermöglicht.

Insbesondere kann besonders bevorzugt vorgesehen sein, dass die Lichtquelle innerhalb des Bodens des Bohnentanks angeordnet ist.

Schließlich kann besonders bevorzugt vorgesehen sein, dass der Deckel des Bohnentanks integraler Bestandteil des Gehäuses ist.

Hierbei ist ein Teil des Gehäuses aufschwenk- oder aufklappbar, welches gleichzeitig als Deckel des Bohnentanks dient.

Ein Ausführungsbeispiel der Erfindung ist in den Figuren dargestellt und im Folgenden näher beschrieben.

Es zeigt:
- Figur 1: einen erfindungsgemäßen Kaffeevollautomaten mit nahezu leerem Bohnentank;
- Figur 2: eine Ausschnittsvergrößerung des Bodens des Bohnentanks aus Figur 1 mit integrierter Lichtquelle;
- Figur 3: desgleichen aus Figur 1 mit gefülltem Bohnentank.

In den Figuren ist ein elektrischer Kaffeevollautomat gezeigt. Der Kaffeevollautomat besteht aus einem Gehäuse 1 mit einem im Gehäuse 1 integrierten Bohnentank 2, einem Mahlwerk 3, einer Brühgruppe 4, Bedienelementen und einer elektrischen Steuerung 5.

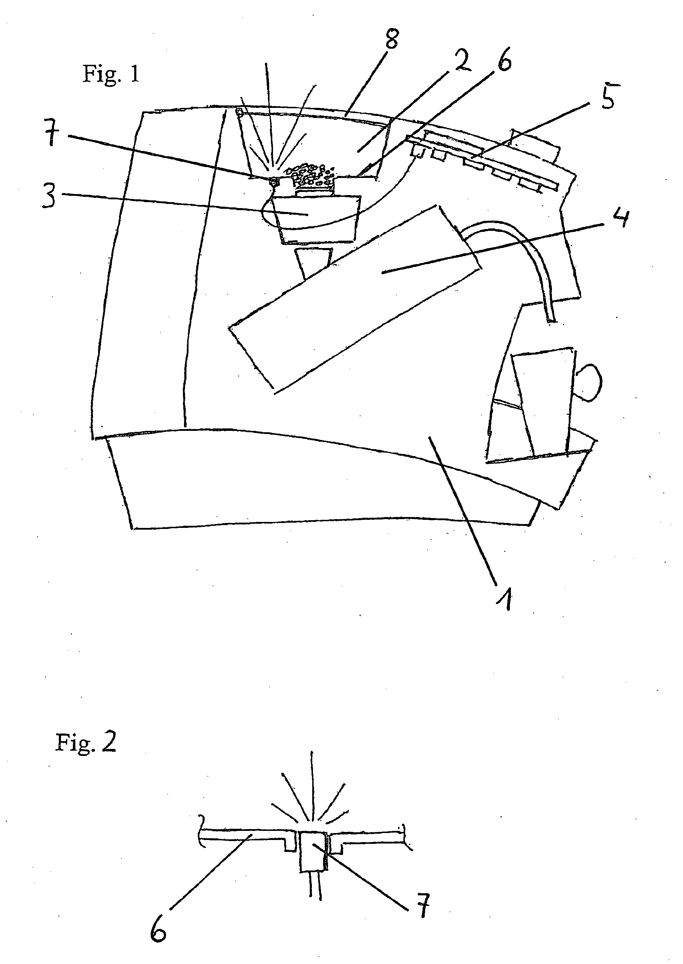

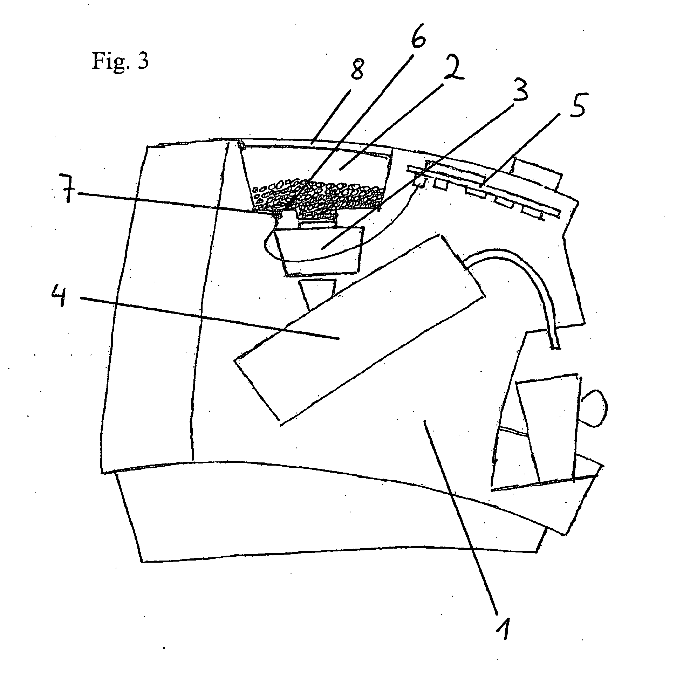

Erfindungsgemäß ist am Boden 6 des Bohnentanks 2 eine Lichtquelle 7 und an der dem Boden 6 gegenüberliegenden Seite des Bohnentanks 2 das Gehäuse 1 lichtdurchlässig (bei 8) ausgebildet. Alternativ kann auch ein lichtdurchlässiger Deckel 8 am Gehäuse 1 angeordnet sein. Sind genügend Kaffeebohnen im Bohnentank 2 (siehe Figur 3), so sieht der Benutzer die Lichtquelle 7 nicht. Sobald der Bohnenvorrat zur Neige geht (Figur 1), sieht der Benutzer die Lichtquelle 7 im Boden 6 des Bohnentanks 2 leuchten. Dies ist für den Benutzer das Zeichen, Kaffeebohnen in den Bohnentank 2 nachzufüllen. Hierdurch kann auf kostengünstige und einfache und dabei langlebige Art und Weise signalisiert werden, dass der Bohnenvorrat innerhalb des Bohnentanks 2 zur Neige geht.

Die Lichtquelle 7 kann innerhalb des Bodens 6 des Bohnentanks 2 angeordnet sein (siehe Figur 2). Hierdurch wird beispielsweise die Lichtquelle 7 nicht durch den Boden 6 des Bohnentanks 2 gedämmt, so dass die Lichtquelle 7 vom Benutzer gut ersichtlich ist.

Im Ausführungsbeispiel besteht die Lichtquelle 7 aus einer LED. Diese weist bei geringem Stromverbrauch eine besonders hohe Lebensdauer auf. Alternativ und in den Figuren nicht gezeigt kann die Lichtquelle 7 aus einer herkömmlichen Glühbirne bestehen.

Bei dem in den Figuren gezeigten Ausführungsbeispiel ist der Deckel 8 des Bohnentanks 2 integraler Bestandteil des Gehäuses 1. Somit weist der Bohnentank 2 keinen eigenen, also am Bohnentank 2 befestigten Deckel auf.

Die Erfindung ist nicht auf das Ausführungsbeispiel beschränkt, sondern im Rahmen der Offenbarung vielfach variabel.

## Patentansprüche

1. Elektrischer Kaffeevollautomat, zumindest bestehend aus einem Gehäuse (1) mit einem im Gehäuse (1) integrierten Bohnentank (2), einem Mahlwerk (3), einer Brühgruppe (4), Bedienelementen und einer elektrischen Steuerung (5), wobei im Boden (6) des Bohnentanks (2) eine Lichtquelle (7), die aus einer LED oder einer Glühbirne besteht, angeordnet ist und an der dem Boden (6) gegenüberliegenden Seite des Bohnentanks (2) das Gehäuse (1) lichtdurchlässig ausgebildet ist, um die Lichtquelle (7) für den Benutzer nicht sichtbar zu machen, wenn genügend Kaffeebohnen im Bohnentank (2) sind, und um die Lichtquelle für den Benutzer sichtbar zu machen, wenn der Bohnenvorrat zur Neige geht, indem der Benutzer die Lichtquelle (7) im Boden (6) des Bohnentanks (2) leuchten sieht.

2. Elektrischer Kaffeevollautomat nach Anspruch 1,
**dadurch gekennzeichnet, dass** die Lichtquelle (7) innerhalb des Bodens (6) des Bohnentanks (2) angeordnet ist.

3. Elektrischer Kaffeevollautomat nach Anspruch 1 oder 2,
**dadurch gekennzeichnet, dass** der Deckel (8) des Bohnentanks (2) integraler Bestandteil des Gehäuses (1) ist.

## Claims

1. A fully automatic electric coffee maker, at least comprising a housing (1) having a beans tank (2) integrated in the housing (1), a grinder (3), a brewing unit (4), control elements and an electric controller (5), wherein in the bottom (6) of the beans tank (2) a light source (7) consisting of an LED or an incandescent bulb is arranged, and at the side of the beans tank (2) opposite to the bottom (6), the housing (1) is transparent, in order to make the light source (7) non visible for the user, when there are enough coffee beans in the beans tank (2), and to make the light source visible for the user, when the beans supply is running short, by that the user sees the light source (7) shine in the bottom (6) of the beans tank (2).

2. The fully automatic electric coffee maker according to claim 1, **characterized by** that the light source (7) is arranged within the bottom (6) of the beans tank (2).

3. The fully automatic electric coffee maker according to claim 1 or 2, **characterized by** that the lid (8) of the beans tank (2) is an integral component of the housing (1).

## Revendications

1. Machine à café électrique entièrement automatique, au moins comprenant un boîtier (1) présentant un réservoir à grains de café (2) intégré dans le boîtier (1), un moulin (3), un module d'infusion (4), des éléments d'actionnement et une commande électrique (5), dans laquelle au fond (6) du réservoir à grains de café (2) une source lumineuse (7) est prévue, qui est une DEL ou une ampoule d'éclairage à incandescence, et dans laquelle au côté opposé au fond (6) du réservoir à grains de café (2) le boîtier (1) est transparent, pour rendre la source lumineuse (7) non visible à l'utilisateur, s'il y a assez de grains de café dans le réservoir à grains de café (2), et pour rendre la source lumineuse visible à l'utilisateur, si le réservoir de grains de café est prêt à se vider, en ce que l'utilisateur voit la source lumineuse (7) éclairer dans le fond (6) du réservoir à grains de café (2).

2. Machine à café électrique entièrement automatique selon la revendication 1, **caractérisée en ce que** la source lumineuse (7) est prévue au-dedans du fond (6) du réservoir à grains de café (2).

3. Machine à café électrique entièrement automatique selon la revendication 1 ou 2, **caractérisée en ce que** le couvercle (8) du réservoir à grains de café (2) est un composant intégral du boîtier (1).
